# EUROPÄISCHE PATENTSCHRIFT

(11) **EP 0 613 221 B1**
(45) Veröffentlichungstag und Bekanntmachung des Hinweises auf die Patenterteilung: **20.01.1999**
(21) Anmeldenummer: 94102788.0
(22) Anmeldetag: 24.02.1994
(51) Int. Cl.: H01S 3/06

(54) **Mehrstufiger faseroptischer Verstärker**
Multistage optical fiber amplifier
Amplificateur à fibre optique à étages multiples

(30) Priorität: 26.02.1993 DE 4305838
(43) Veröffentlichungstag der Anmeldung: 31.08.1994
(73) Patentinhaber: ALCATEL ALSTHOM COMPAGNIE GENERALE D'ELECTRICITE, 75008 Paris (FR)
(72) Erfinder: Junginger, Bernhard, D-71083 Herrenberg (DE)
(74) Vertreter: Kugler, Hermann, Dipl.-Phys.

(56) Entgegenhaltungen:
- EP-A- 0 387 075
- EP-A- 0 459 685
- EP-A- 0 509 577
- US-A- 5 050 949
- OPTICAL AMPLIFIERS AND APPLICATIONS, TECHNICAL DIGEST 92,OPTICAL SOCIETY OF AMERICA, WASHINGTON D.C. 1992,VOL. 17, SEITEN 58 BIS 61 R.I.LAMING ET AL. 'High sensitivity optical pre-amplifier at 10 Gbit/s employing a low noise composite EDFA with 46 dB gain'

## Beschreibung

Die Erfindung betrifft einen mindestens zweistufigen faseroptischen Verstärker nach dem Oberbegriff des Patentanspruchs 1.

Solche faseroptische Verstärker sind bekannt, z.B. aus Laming, R.I., et al, "High Sensitivity Optical Pre-Amplifier At 10 Gbit/s Employing A Low Noise Composite EDFA With 46 dB Gain", in Optical Amplifiers and Applications, Technical Digest 1992, (Optical Society of America, Washington D.C. 1992), Vol. 17, Seiten 58 bis 61.

Dort ist ein zweistufiger faseroptischer Verstärker gezeigt, dessen verstärkende Lichtwellenleiterstücke mit Erbium-Ionen (Er³⁺) dotiert sind.

Die Verstärkung eines Signals, das eine Wellenlänge von 1536 nm hat, erfolgt in einer ersten und zweiten Verstärkerstufe. Das Anregen der Erbium-Ionen erfolgt durch einen Pumplaser, der Pumplicht mit einer Wellenlänge von 980 nm emittiert. Nach der ersten Verstärkerstufe wird das Pumplicht mittels zweier wellenlängenselektiver Koppler an einem optischen Isolator vorbeigeführt. Der optische Isolator sperrt das von der verstärkten spontanen Emission (engl.: Amplified Spontaneous Emission, ASE) verursachte und entgegen der Ausbreitungsrichtung des Signals verlaufende Licht. Pumplicht und Signal durchlaufen dann die zweite Verstärkerstufe, nach der das verstärkte Signal zur Verfügung steht, das zu einem Empfänger geführt wird.

Ein Nachteil dieser Konfiguration ist, daß im Empfänger, vor allem bei hohen Signalleistungen, neben dem durch die spontane Emission verursachten Rauschen noch zusätzliches Rauschen auftritt.

Es ist die Aufgabe der Erfindung, einen faseroptischen Verstärker anzugeben, durch den es im Empfänger zu keinem zusätzlichen Rauschen kommt.

Die Lösung der Aufgabe erfolgt mit den im Anspruch 1, 7 oder 8 angegebenen Merkmalen. Vorteilhafte Ausgestaltungen der Erfindung sind den Unteransprüchen zu entnehmen.

Die Erfindung wird nun anhand der Zeichnungen näher erläutert. Es zeigen:
- Fig. 1: ein erstes Ausführungsbeispiel eines erfindungsgemäßen zweistufigen faseroptischen Verstärkers,
- Fig. 2: ein zweites Ausführungsbeispiel eines erfindungsgemäßen zweistufigen faseroptischen Verstärkers,
- Fig. 3: ein drittes Ausführungsbeispiel eines erfindungsgemäßen zweistufigen faseroptischen Verstärkers.

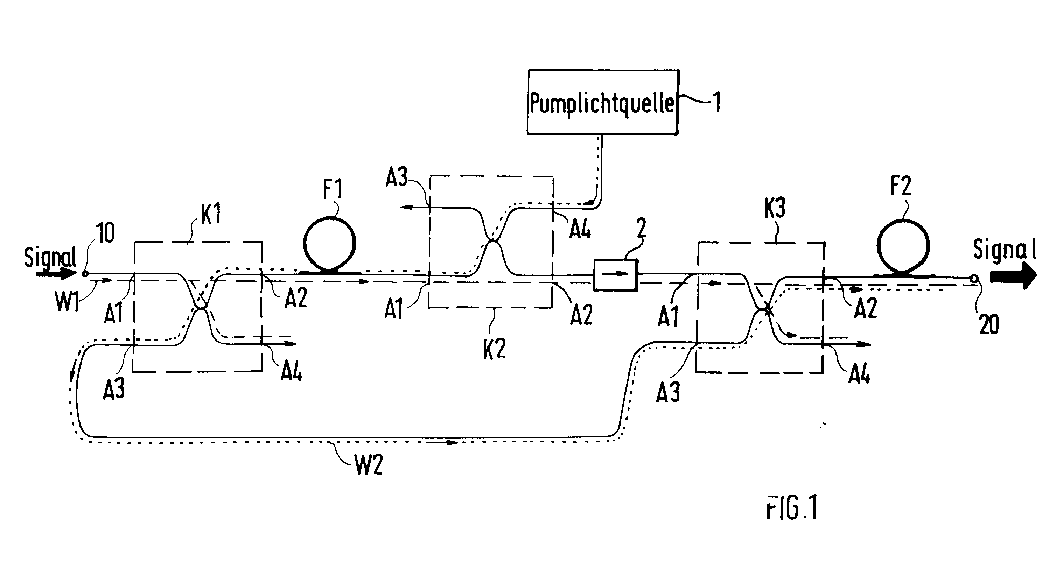

Das erste Ausführungsbeispiel in Fig. 1 hat drei Koppler K1, K2, K3, die wellenlängenselektiv sind, zwei Lichtwellenleiterstücke F1, F2, die mit einem Seltenerd-Element, z.B. Erbium, dotiert sind, eine Pumplichtquelle 1, die vorzugsweise einen Laser hat, der Licht einer Wellenlänge von 980 nm emittiert, und Mittel 2, die Licht nur in einer Richtung durchlassen. Solche Mittel sind beispielsweise optische Isolatoren oder optische Filter, welche einzeln oder kombiniert verwendet werden können. In den Ausführungsbeispielen wird ein optischer Isolator 2 verwendet. Optische Isolatoren und wellenlängenselektive Koppler sind bekannt aus: Grau, G., "Optische Nachrichtentechnik", zweite Auflage, Berlin, Heidelberg, New York, Tokyo, Springer-Verlag, 1986, Seiten 286 und 296 bis 302. Die Ausbreitungsrichtung des zu verstärkenden optischen Signals ist in Fig. 1 so festgelegt, daß es an einem Eingang 10 in den faseroptischen Verstärker eintritt und an einem Ausgang 20 verstärkt austritt. In Fig. 1, wie auch in den weiteren Ausführungsbeispielen, ist die Verstärkung des optischen Signals durch unterschiedlich große Pfeile am Eingang 10 und am Ausgang 20 dargestellt.

Der optische Isolator 2 sperrt Licht, das sich entgegen der Ausbreitungsrichtung des optischen Signals ausbreitet.

Die genannten Koppler K1, K2, K3, die Lichtwellenleiterstücke F1, F2, der optische Isolator 2 und die Pumplichtquelle 1 sind über Lichtwellenleiter miteinander verbunden, so daß sich die folgende Anordnung und Signalzuführung ergeben:
- Dem ersten Koppler K1 sind das erste Lichtwellenleiterstück F1, der zweite und der dritte Koppler K2, K3 und das zweite Lichtwellenleiterstück F2 in der angegebenen Reihenfolge nachgeschaltet, wobei die Koppler je einen ersten, zweiten, dritten und vierten Anschluß A1 - A4 haben,
- das zu verstärkende optische Signal wird dem ersten Koppler K1 über den ersten Anschluß A1 zugeführt und verläßt diesen über den zweiten Anschluß A2, der mit dem ersten Lichtwellenleiterstück F1 verbunden ist,
- das nach dem ersten Lichtwellenleiterstück F1 zur Verfügung stehende verstärkte optische Signal wird dem zweiten Koppler K2 über den ersten Anschluß A1 zugeführt und verläßt diesen über den zweiten Anschluß A2, der mit dem ersten Anschluß A1 des dritten Kopplers K3 verbunden ist. Das verstärkte optische Signal verläßt den dritten Koppler K3 über den zweiten Anschluß A2, der mit dem zweiten Lichtwellenleiterstück F2 verbunden ist. Nach dem zweiten Lichtwellenleiterstück F2 steht das verstärkte optische Signal am Ausgang 20 des faseroptischen Verstärkers zur Verfügung,
- das von der Pumplichtquelle 1 emittierte Pumplicht wird dem zweiten Koppler K2 über den vierten Anschluß A4 zugeführt und verläßt diesen über den ersten Anschluß A1, der mit dem ersten Lichtwellenleiterstück F1 verbunden ist. Das Pumplicht wird anschließend dem zweiten Anschluß A2 des ersten Kopplers K1 zugeführt, den es über dessen dritten Anschluß A3 verläßt. Der dritte Anschluß A3 des ersten Kopplers K1 ist mit dem dritten Anschluß A3 des dritten Kopplers K3 verbunden. Das somit dem dritten Koppler K3 zugeführte Pumplicht verläßt diesen über dessen zweiten Anschluß A2 und geht in das zweite Lichtwellenleiterstück F2 über.

Die Ausbreitungswege des optischen Signals, Weg W1, und des Pumplichts, Weg W2, sind in Fig. 1 eingezeichnet. Der Weg W1 des optischen Signals ist durch eine gestrichelte Linie dargestellt. In dem ersten und dritten Koppler K1, K3 ist eine Aufteilung des optischen Signals eingezeichnet, die durch nicht ideale Koppler verursacht wird. Das am ersten Anschluß A1 der Koppler K1, K3 eintretende optische Signal teilt sich in einen am zweiten Anschluß A2 austretenden ersten Anteil, den Hauptanteil, und in einen am vierten Anschluß A4 austretenden zweiten Anteil, den Verlustanteil.

Der in diesem Ausführungsbeispiel ausgekoppelte Verlustanteil des optischen Signals überlagert sich nicht mehr mit dem Hauptanteil.

Der Weg W2 des Pumplichts ist durch eine gepunktete Linie dargestellt.

Das Pumpen des ersten Lichtwellenleiterstücks F1 erfolgt hier entgegen der Ausbreitungsrichtung des optischen Signals, das heißt, das Pumplicht tritt am ersten Anschluß A1 des zweiten Kopplers K2 aus, durchläuft das erste Lichtwellenleiterstück F1, und tritt in den zweiten Anschluß A2 des ersten Kopplers K1 ein. Das durch den Pumpvorgang nicht verbrauchte Pumplicht wird durch den ersten Koppler K1 ausgekoppelt und dem dritten Koppler K3 zugeführt, der es in das zweite Lichtwellenleiterstück F2 einkoppelt. Das zweite Lichtwellenleiterstück F2 wird somit in Ausbreitungsrichtung des optischen Signals gepumpt.

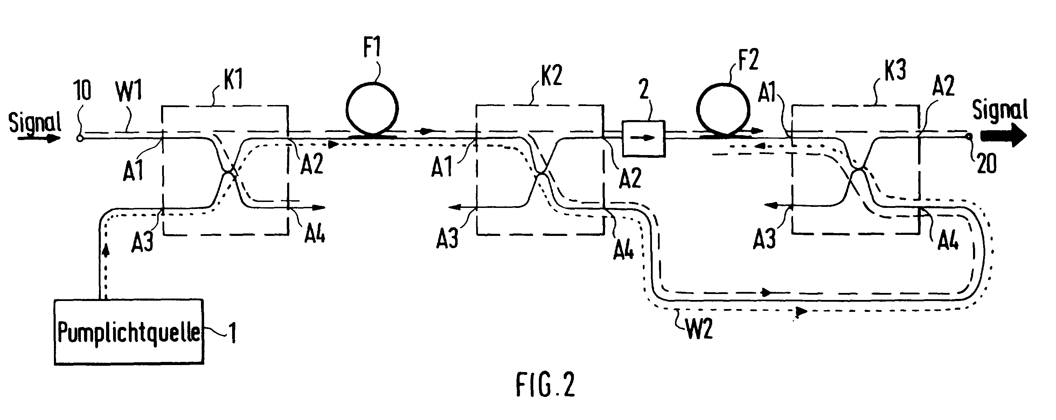

Das in Fig. 2 gezeigt zweite Ausführungsbeispiel hat die gleichen Bestandteile wie das in Fig. 1 dargestellte, die auch die gleichen Bezugszeichen haben. Deshalb wird an dieser Stelle auf deren Aufzählung verzichtet.

Es ergeben sich folgende Anordnung und Signal zuführung:
- Dem ersten Koppler K1 sind das erste Lichtwellenleiterstück F1, der zweite Koppler K2, das zweite Lichtwellenleiterstück F2 und der dritte Koppler K3 in der angegebenen Reihenfolge nachgeschaltet, wobei die Koppler je einen ersten, zweiten, dritten und vierten Anschluß A1 - A4 haben,
- das zu verstärkende optische Signal wird dem ersten Koppler K1 über den ersten Anschluß A1 zugeführt und verläßt diesen über den zweiten Anschluß A2, der mit dem ersten Lichtwellenleiterstück F1 verbunden ist,
- das nach dem ersten Lichtwellenleiterstück F1 zur Verfügung stehende verstärkte optische Signal wird dem zweiten Koppler K2 über den ersten Anschluß A1 zugeführt und verläßt diesen über den zweiten Anschluß A2. Das verstärkte optische Signal geht in das zweite Lichtwellenleiterstück F2 über. Anschließend wird es über den ersten Anschluß A1des dritten Kopplers K3 und dessen zweiten Anschluß A2 dem Ausgang 20 des faseroptischen Verstärkers zugeführt,
- das von der Pumplichtquelle 1 emittierte Pumplicht wird dem ersten Koppler K1 über den dritten Anschluß A3 zugeführt und verläßt diesen über den zweiten Anschluß A2, der mit dem ersten Lichtwellenleiterstück F1 verbunden ist. Das Pumplicht wird anschließend dem ersten Anschluß A1 des zweiten Kopplers K2 zugeführt, den es über dessen vierten Anschluß A4 verläßt. Der vierte Anschluß A4 des zweiten Kopplers K2 ist mit dem vierten Anschluß A4 des dritten Kopplers K3 verbunden. Das somit dem dritten Koppler K3 zugeführte Pumplicht wird über den ersten Anschluß A1 des dritten Kopplers K3 dem zweiten Lichtwellenleiterstück F2 zugeführt,
- zwischen dem zweiten Koppler K2 und dem zweiten Lichtwellenleiterstück F2 ist der optische Isolator 2 angeordnet.

Auch hier sind die Ausbreitungswege des optischen Signals, Weg W1, und des Pumplichts, Weg W2, eingezeichnet, die wie in Fig. 1 gekennzeichnet sind.

Durch den ersten Koppler K1 wird ebenfalls das optische Signal in einen Anteil, den Hauptanteil, und einen zweiten Anteil, den Verlustanteil aufgeteilt. Dieser Verlustanteil überlagert sich nicht mehr dem Hauptanteil.

Der durch den zweiten Koppler K2 ausgekoppelte Verlustanteil des optischen Signals wird durch den dritten Koppler K3 wieder dem Hauptanteil überlagert, jedoch nicht gleichsinnig mit dem Hauptanteil des optischen Signals.

Das erste Lichtwellenleiterstück F1 wird in Ausbreitungsrichtung des optischen Signals gepumpt; das Pumplicht verläuft vom zweiten Anschluß A2 des ersten Kopplers K1 über das erste Lichtwellenleiterstück F1, zum ersten Anschluß A1 des zweiten Kopplers K2.

Das zweite Lichtwellenleiterstück F2 wird entgegen der Ausbreitungsrichtung des optischen Signals gepumpt, d.h. das Pumplicht verläuft vom ersten Anschluß A1 des dritten Kopplers K3 ausgehend durch das zweite Lichtwellenleiterstück F2.

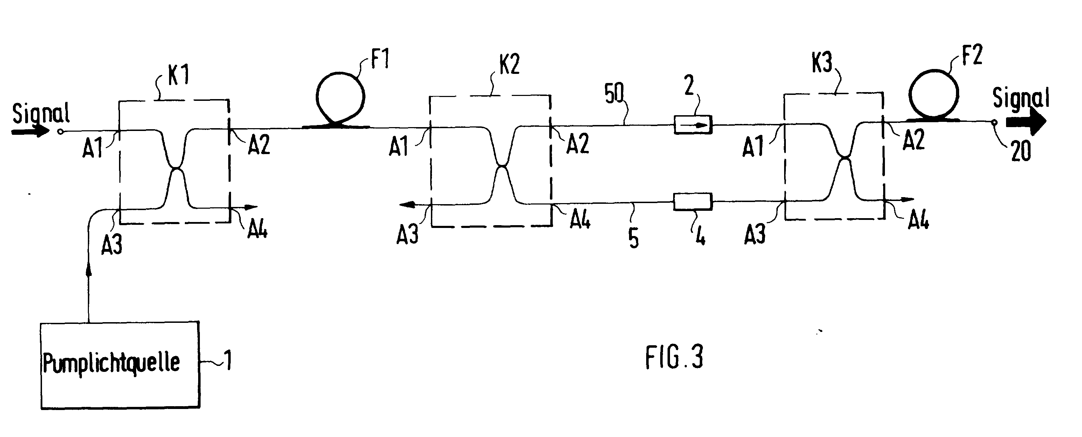

Das in Fig. 3 gezeigte dritte Ausführungsbeispiel hat außer den in Fig. 1 dargestellten Bestandteilen, die auch die gleichen Bezugszeichen haben, einen Lichtwellenleiter 5.

Es ergeben sich folgende Anordnung und Signal zuführung:
- Dem ersten Koppler K1 sind das erste Lichtwellenleiterstück F1, der zweite Koppler K2, der dritte Koppler K3 und das zweite Lichtwellenleiterstück F2 in der angegebenen Reihenfolge nachgeschaltet, wobei die Koppler vier Anschlüsse A1 - A4 haben,
- das zu verstärkende optische Signal wird dem ersten Koppler K1 über den ersten Anschluß A1 zugeführt und verläßt diesen über den zweiten Anschluß A2, der mit dem ersten Lichtwellenleiterstück F1 verbunden ist,
- das nach dem ersten Lichtwellenleiterstück F1 zur Verfügung stehende verstärkte optische Signal wird dem zweiten Koppler K2 über den ersten Anschluß A1 zugeführt, verläßt diesen über den zweiten Anschluß A2 und wird dem dritten Koppler K3 über den ersten Anschluß A1 zugeführt. Das verstärkte optische Signal verläßt den dritten Koppler K3 über den zweiten Anschluß A2 und geht über in das zweite Lichtwellenleiterstück F2, nach dem es am Ausgang 20 des faseroptischen Verstärkers zur Verfügung steht,
- den zweiten Anschluß A2 des zweiten Kopplers K2 und den ersten Anschluß A1 des dritten Kopplers K3 verbindet ein Lichtwellenleiter 50, in den ein optischer Isolator 2 eingefügt ist,
- der vierte Anschluß A4 des zweiten Kopplers K2 und der dritte Anschluß A3 des dritten Kopplers K3 sind über den Lichtwellenleiter 5 verbunden, wobei in den Lichtwellenleiter 5 Mittel 4 eingefügt sind, die die Ausbreitung des optischen Signals verhindern,
- das von der Pumplichtquelle 1 emittierte Pumplicht wird dem ersten Koppler K1 über den dritten Anschluß A3 zugeführt und verläßt diesen über den zweiten Anschluß A2, der mit dem ersten Lichtwellenleiterstück F1 verbunden ist. Das Pumplicht wird anschließend dem ersten Anschluß A1 des zweiten Kopplers K2 zugeführt, den es über dessen vierten Anschluß A4 verläßt. Über den Lichtwellenleiter 5 wird es dem dritten Anschluß A3 des dritten Kopplers K3 zugeführt, den es über den zweiten Anschluß A2 verläßt, um dann dem zweiten Lichtwellenleiterstück F2 zugeführt zu werden.

Die Mittel 4, die in den Lichtwellenleiter 5 eingefügt sind, haben erfindungsgemäß die Aufgabe, den über den zweiten Koppler K2 ausgekoppelten Verlustanteil des optischen Signals an der Ausbreitung zu hindern. Solch ein Mittel ist beispielsweise ein Faserfilter mit der Eigenschaft einer Bandsperre, d.h. die Charakteristik der Bandsperre ist so gewählt, daß die Wellenlänge des optischen Signals gesperrt wird. Es ist auch möglich, das Faserfilter so zu wählen, daß nur die Wellenlänge des Pumplichts durchgelassen wird.

Alternativ zu einem Faserfilter besteht auch die Möglichkeit, die Mittel 4 mit optischen Linsen und optischen Filtern, z.B. Etalons, auszubilden.

Durch die Mittel 4 wird der Verlustanteil des optischen Signals gesperrt, so daß es zu keiner Überlagerung mit dem Hauptanteil mehr kommt.

Faseroptische Verstärker dienen in optischen Übertragungssystemen zur Verstärkung von optischen Signalen. Dies ist notwendig, da die optischen Signale durch den Lichtwellenleiter gedämpft werden. Eine Verstärkung ist auch notwendig, wenn in einem Verteilsystem die optischen Signale aufgeteilt werden. Ein optisches Übertragungssystem hat mindestens einen optischen Sender, eine Übertragungsstrecke und einen optischen Empfänger. Eine in einem Empfänger enthaltene Photodiode empfängt neben dem Signallicht auch das Licht, das durch die verstärkte spontane Emission (ASE) im faseroptischen Verstärker verursacht wird. Dieses Licht verursacht in der Photodiode ein Rauschsignal. Zu diesem Rauschsignal kommt das Rauschen hinzu, das im folgenden erklärt wird:

Das Pumplicht wird im angegebenen Stand der Technik an dem optischen Isolator, der sich zwischen der ersten und zweiten Verstärkungsstufe befindet, mittels zweier wellenselektiver Koppler vorbeigeführt. Der vor dem optischen Isolator angeordnete Koppler koppelt das Pumplicht und, da der Koppler nicht ideal ist, auch einen Anteil des zu verstärkenden Signals aus. Der nach dem optischen Isolator angeordnete Koppler führt das Pumplicht und die Anteile des optischen Signals wieder zusammen. Es gibt also einen ersten Anteil des zu verstärkenden optischen Signals, der durch den optischen Isolator geführt wird, und einen zweiten Anteil, der an dem optischen Isolator vorbeigeführt wird. Zwischen diesen beiden Anteilen des Signallichts besteht eine Phasendifferenz. Diese entsteht dadurch, daß die Wege, die die beiden Anteile zurücklegen, unterschiedlich lang sind. Eine Wegdifferenz ist dadurch begründet, daß in der Praxis die beiden Strecken nicht gleich lang ausgeführt werden können.

Eine in der Photodiode entstehender Photostrom I_{Ph} ist proportional der einfallenden Lichtleistung P_{L} und diese ist proportional dem Quadrat der elektrischen Feldstärke E des Signals, d.h. I_{Ph}.P_{L}.(E)².

Hat der Anteil des Signallichts, der durch den optischen Isolator geht, eine elektrische Feldstärke E₁ und der Anteil des Signallichts, der an dem optischen Isolator vorbeigeführt wird, eine elektrische Feldstärke E₂, ergibt sich durch Überlagerung die Gesamtfeldstärke E, die an der Photodiode ankommt, zu E = E₁+E₂.

Durch Quadrieren von E ergibt sich ein Mischterm 2"E₁"E₂, der ursächlich für das zusätzliche Rauschen ist. Sind die zu übertragenden Lichtleistungen klein, ist das Problem, das sich aufgrund der Mischterme ergibt, vernachlässigbar. Bei höheren Lichtleistungen und beim Einsatz von empfindlichen optischen Empfängern tritt jedoch das Problem verstärkt hervor.

Dieses Problem ist bei den Ausführungsbeispielen nicht mehr vorhanden. Die Pumplichtquellen sind so angeordnet bzw. die wellenlängenselektiven Koppler sind so miteinander verbunden, daß es zu keiner gleichsinnigen Überlagerung von Signalanteilen kommt, die sich zwischen Eingang 10 und Ausgang 20 des faseroptischen Verstärkers auf unterschiedlichen Wegen ausbreiten.

Im dritten Ausführungsbeispiel kommt es ebenfalls zu keiner gleichsinnigen Überlagerung, da der Verlustanteil des optischen Signals an der Ausbreitung gehindert wird.

Die Erfindung ist anhand der Ausführungsbeispiele für einen zweistufigen faseroptischen Verstärker erklärt. Wird der Grundgedanke der Erfindung beachtet, sind auch mehr als zwei Stufen der Verstärkung ausführbar. Desweiteren sind alle Bestandteile des faseroptischen Verstärkers diskret aufgebaut; es ist auch möglich, alle oder einige Bestandteile zu integrieren.

## Patentansprüche

1. Mindestens zweistufiger faseroptischer Verstärker zur Verstärkung eines optischen Signals, bei dem mindestens vorhanden sind:
eine Pumplichtquelle (1), ein erstes und zweites Lichtwellenleiterstück (F1, F2), die mit einem Seltenerd-Element dotiert sind, und ein erster, zweiter und dritter Koppler (K1, K2, K3), die wellenlängenselektiv sind und über die die Lichtwellenleiterstücke miteinander und die Pumplichtquelle (1) mit den Lichtwellenleiterstücken verbunden sind,
**dadurch gekennzeichnet,** daß die
Pumplichtquelle (1), die Lichtwellenleiterstücke (F1, F2) und die Koppler (K1, K2, K3) so angeordnet sind, daß das Pumplicht so geführt wird, daß zuerst das erste Lichtwellenleiterstück (F1) in oder entgegen der Ausbreitungsrichtung des optischen Signals gepumpt wird und dann das zweite Lichtwellenleiterstück (F2) entgegen oder in der Ausbreitungsrichtung des optischen Signals gepumpt wird, derart daß die Pumprichtungen in den beiden Lichtwellenleiterstücken gegenlänfig sind.

2. Mindestens zweistufiger faseroptischer Verstärker nach Anspruch 1, dadurch gekennzeichnet, daß die Pumplichtquelle (1), die Lichtwellenleiterstücke (F1, F2) und die Koppler (K1, K2, K3) so angeordnet sind, daß verhindert wird, daß sich Signalanteile des optischen Signals, die sich zwischen Eingang (10) und Ausgang (20) des faseroptischen Verstärkers auf unterschiedlichen Wegen ausbreiten, gleichsinnig überlagern.

3. Mindestens zweistufiger faseroptischer Verstärker nach Anspruch 1,
dadurch gekennzeichnet, daß die Koppler (K1, K2, K3) und die Lichtwellenleiterstücke (F1, F2), denen das optische Signal und das von der Pumplichtquelle (1) emittierte Pumplicht zugeführt werden, wie folgt angeordnet sind:
- Dem ersten Koppler (K1) sind das erste Lichtwellenleiterstück (F1), der zweite und der dritte Koppler (K2, K3) und das zweite Lichtwellenleiterstück (F2) in der angegebenen Reihenfolge nachgeschaltet, wobei die Koppler je einen ersten, zweiten, dritten und vierten Anschluß (A1, A2, A3, A4) haben,
und daß das optische Signal und das Pumplicht wie folgt geführt werden:
- Das zu verstärkende optische Signal wird über den ersten und den zweiten Anschluß (A1, A2) des ersten Kopplers (K1) dem ersten Lichtwellenleiterstück (F1) zugeführt,
- das nach dem ersten Lichtwellenleiterstück (F1) zur Verfügung stehende verstärkte optische Signal wird über den ersten und den zweiten Anschluß (A1, A2) des zweiten Kopplers (K2) und danach über den ersten und den zweiten Anschluß (A1, A2) des dritten Kopplers (K3) dem zweiten (F2) Lichtwellenleiterstück zugeführt, nach dem das verstärkte optische Signal an einem Ausgang (20) des faseroptischen Verstärkers zur Verfügung steht,
- das Pumplicht gelangt über den vierten und den ersten Anschluß (A4, A1) des zweiten Kopplers (K2) zum ersten Lichtwellenleiterstück (F1), danach über den zweiten und den dritten Anschluß (A2, A3) des ersten Kopplers (K1) und danach über den dritten und den zweiten Anschluß (A3, A2) des dritten Kopplers (K3) zum zweiten Lichtwellenleiterstück (F2).

4. Mindestens zweistufiger faseroptischer Verstärker nach Anspruch 2,
**dadurch gekennzeichnet,** daß die Koppler (K1, K2, K3) und die Lichtwellenleiterstücke (F1, F2), denen das optische Signal und das von der Pumplichtquelle (1) emittierte Pumplicht zugeführt wird, wie folgt angeordnet sind:
- Dem ersten Koppler (K1) sind das erste Lichtwellenleiterstück (F1), der zweite Koppler (K2), das zweite Lichtwellenleiterstück (F2) und der dritte Koppler (K3) in der angegebenen Reihenfolge nachgeschaltet, wobei die Koppler je einen ersten, zweiten, dritten und vierten Anschluß (A1, A2, A3, A4) haben,
und daß das optische Signal und das Pumplicht wie folgt geführt werden:
- Das zu verstärkende optische Signal wird über den ersten und den zweiten Anschluß (A1, A2) des ersten Kopplers (K3) dem ersten Lichtwellenleiterstück (F1) zugeführt,
- das nach dem ersten Lichtwellenleiterstück (F1), zur Verfügung stehende verstärkte optische Signal wird über den ersten und den zweiten Anschluß (A1, A2) des zweiten Kopplers (K2) dem zweiten Lichtwellenleiterstück (F1) zugeführt,
- das nach dem zweiten Lichtwellenleiterstück (F2) zur Verfügung stehende verstärkte optische Signal wird über den ersten und den zweiten Anschluß (A1, A2) des dritten Kopplers (K3) dem Ausgang (20) des faseroptischen Verstärkers zugeführt,
- das Pumplicht gelangt über den dritten und den zweiten Anschluß (A3, A2) des ersten Kopplers (K1) zum ersten Lichtwellenleiterstück (F1), danach über den ersten und den vierten Anschluß (A1, A4) des zweiten Kopplers (K2), und dann über den vierten und den ersten Anschluß (A4, A1) des dritten Kopplers (K3) zum zweiten Lichtwellenleiterstück (F2).

5. Mindestens zweistufiger faseroptischer Verstärker nach Anspruch 3,
dadurch gekennzeichnet, daß zwischen dem zweiten und dem dritten Koppler (K2, K3) Mittel (2) vorhanden sind, die Licht nur in einer Richtung durchlassen.

6. Mindestens zweistufiger faseroptischer Verstärker nach Anspruch 4,
dadurch gekennzeichnet, daß zwischen dem zweiten Koppler (K2) und dem zweiten Lichtwellenleiterstück (F2) Mittel (2) vorhanden sind, die Licht nur in einer Richtung durchlassen.

7. Mindestens zweistufiger faseroptischer Verstärker zur Verstärkung eines optischen Signals, bei dem mindestens vorhanden sind:
eine Pumplichtquelle (1), ein erstes und zweites Lichtwellenleiterstück (F1, F2), die mit einem Seltenerd-Element dotiert sind, und ein erster, zweiter und dritter Koppler (K1, K2, K3), die wellenlängenselektiv sind und über die die Lichtwellenleiterstücke miteinander und die Pumplichtquelle (1) mit den Lichtwellenleiterstücken verbunden sind, und bei dem zwei Lichtwellenleiter (50, 5), die jeweils zwischen einem Ausgang des zweiten Kopplers (K2) und einem Eingang des dritten Kopplers (K3) angeordnet sind, und Mittel (2), die in einen dieser Lichtwellenleiter (50) eingefügt sind und Licht nur in eine Richtung durchlassen, vorhanden sind, **dadurch gekennzeichnet**, daß in den anderen Lichtwellenleiter (5) Mittel (4) eingefügt sind, die die Ausbreitung des optischen Signals in Richtung vom zweiten Koppler (K2) zum dritten Koppler (K3) verhindern.

## Claims

1. An at least two-stage fiber-optic amplifier for amplifying an optical signal, comprising:
a pump-light source (1), first and second sections of optical fiber (F1, F2) doped with a rare-earth element, and first, second, and third wavelength-selective couplers (K1, K2, K3) serving to interconnect the sections of optical fiber and to connect the pump-light source (1) with the sections of optical fiber,
**characterized in** that the pump-light source (1), the sections of optical fiber (F1, F2), and the couplers (K1, K2, K3) are arranged to guide the pump light so that first the first section of optical fiber (F1) is pumped in or opposite to the direction of propagation of the optical signal and then the second section of optical fiber (F2) is pumped opposite to or in the direction of propagation of the optical signal, such that the directions of pumping in the two sections of optical fiber are opposite to each other.

2. An at least two-stage fiber-optic amplifier as claimed in claim 1, characterized in that the pump-light source (1), the sections of optical fiber (F1, F2), and the couplers (K1, K2, K3) are arranged to prevent optical-signal components which propagate between an input (10) and an output (20) of the fiber-optic amplifier along different paths in the same direction from beating with one another.

3. An at least two-stage fiber-optic amplifier as claimed in claim 1,
characterized in that the couplers (K1, K2, K3) and the sections of optical fiber (F1, F2), into which the optical signal and the pump light emitted by the pump-light source (1) are fed, are arranged as follows:
- The first coupler (K1) is followed by the first section of optical fiber (F1), the second coupler (K2), the third coupler (K3), and the second section of optical fiber (F2) in that order, each of the couplers having first, second, third, and fourth ports (A1, A2, A3, A4),
and that the optical signal and the pump light are routed as follows:
- The optical signal to be amplified is fed via the first and second ports (A1, A2) of the first coupler (K1) into the first section of optical fiber (F1);
- the amplified optical signal available after the first section of optical fiber (F1) is fed via the first and second ports (A1, A2) of the second coupler (K2) and then via the first and second ports (A1, A2) of the third coupler (K3) into the second section of optical fiber (F2), after which the amplified optical signal is available at an output (20) of the fiber-optic amplifier; and
- the pump light is fed via the fourth and first ports (A4, A1) of the second coupler (K2) into the first section of optical fiber (F1), then via the second and third ports (A2, A3) of the first coupler (K1), and then via the third and second ports (A3, A2) of the third coupler (K3) into the second section of optical fiber (F2).

4. An at least two-stage fiber-optic amplifier as claimed in claim 2,
characterized in that the couplers (K1, K2, K3) and the sections of optical fiber (F1, F2), into which the optical signal and the pump light emitted by the pump-light source (1) are fed, are arranged as follows:
- The first coupler (K1) is followed by the first section of optical fiber (F1), the second coupler (K2), the second section of optical fiber (F2), and the third coupler (K3) in that order, each of the couplers having first, second, third, and fourth ports (A1, A2, A3, A4),
and that the optical signal and the pump light are routed as follows:
- The optical signal to be amplified is fed via the first and second ports (A1, A2) of the first coupler (K1) into the first section of optical fiber (F1);
- the amplified optical signal available after the first section of optical fiber (F1) is fed via the first and second ports (A1, A2) of the second coupler (K2) into the second section of optical fiber (F2);
- the amplified optical signal available after the second section of optical fiber (F2) is routed via the first and second ports (A1, A2) of the third coupler (K3) to the output (20) of the fiber-optic amplifier; and
- the pump light is fed via the third and second ports (A3, A2) of the first coupler (K1) into the first section of optical fiber (F1), then via the first and fourth ports (A1, A4) of the second coupler (K2), and then via the fourth and first ports (A4, A1)of the third coupler (K3) into the second section of optical fiber (F2).

5. An at least two-stage fiber-optic amplifier as claimed in claim 3,
characterized in that between the second and third couplers (K2, K3), means (2) are provided which pass light in only one direction.

6. An at least two-stage fiber-optic amplifier as claimed in claim 4,
characterized in that between the second coupler (K2) and the second section of optical fiber (F2), means (2) are provided which pass light in only one direction.

7. An at least two-stage fiber-optic amplifier for amplifying an optical signal, comprising:
a pump-light source (1), first and second sections of optical fiber (F1, F2) doped with a rare-earth element, first, second, and third wavelength-selective couplers (K1, K2, K3) serving to interconnect the sections of optical fiber (F1, F2) and to connect the pump-light source (1) with the sections of optical fiber (F1, F2), two optical fibers (50, 5) each provided between one output port of the second coupler (K2) and one input port of the third coupler (K3), and means (2) in one (50) of said two optical fibers (50, 5) which pass light in only one direction,
**characterized in** that the other one (5) of said two optical fibers (5, 50) contains means (4) which prevent the optical signal from propagating in a direction from the second coupler (K2) to the third coupler (K3).

## Revendications

1. Amplificateur à fibres optiques au moins à deux étages pour l'amplification d'un signal optique, qui présente au moins les composants suivants :
une source de lumière de pompage (1), un premier et un deuxième segments de fibre (F1, F2), qui sont dopés avec un élément de terre rare, et un premier, un deuxième et un troisième coupleurs (K1, K2, K3), qui sont sélectifs au niveau de la longueur d'onde et par lesquels les segments de fibre sont reliés entre eux et la source de lumière de pompage (1) est reliée aux segments de fibre,
caractérisé en ce que la source de lumière de pompage (1), les segments de fibre (F1, F2) et les coupleurs (K1, K2, K3) sont disposés de telle sorte que la lumière de pompage soit guidée de façon que d'abord le premier segment de fibre (F1) est pompé dans le sens de propagation du signal optique ou dans le sens contraire et ensuite le deuxième segment de fibre (F2) est pompé dans le sens de propagation du signal optique ou dans le sens contraire, de telle façon que les sens de pompage dans les deux segments de fibre soient opposés.

2. Amplificateur à fibres optiques au moins à deux étages selon la revendication 1, caractérisé en ce que la source de lumière de pompage (1), les segments de fibre (F1, F2) et les coupleurs (K1, K2, K3) sont disposés de façon à empêcher que des parties de signal du signal optique, qui se propagent sur différents trajets entre l'entrée (10) et la sortie (20) de l'amplificateur à fibres optiques, se superposent dans le même sens.

3. Amplificateur à fibres optiques au mois à deux étages selon la revendication 1, caractérisé en ce que les coupleurs (K1, K2, K3) et les segments de fibre (F1, F2), auxquels le signal optique et la lumière de pompage émise par la source de lumière de pompage (1) sont amenés, sont disposés de la façon suivante :
- le premier segment de fibre (F1), le deuxième coupleur et le troisième coupleur (K2, K3) et le deuxième segment de fibre (F2) sont disposés en aval du premier coupleur (K1) dans l'ordre indiqué, les coupleurs ayant chacun un premier, un deuxième, un troisième et un quatrième branchements (A1, A2, A3, A4).
et en ce que le signal optique et la lumière de pompage sont guidés de la façon suivante :
- le signal optique à amplifier est amené par le premier et le deuxième branchement (A1, A2) du premier coupleur (K1) au premier segment de fibre (F1),
- le signal optique amplifié disponible après le premier segment de fibre (F1) est amené par le premier et le deuxième branchement (A1 ; A2) du deuxième coupleur (K2) et ensuite par le premier et le deuxième branchement (A1, A2) du troisième coupleur (K3) au deuxième segment de fibre (F2), après lequel le signal optique amplifié est disponible à une sortie (20) de l'amplificateur à fibres optiques.
- la lumière de pompage parvient par le quatrième et le premier branchement (A4, A1) du deuxième coupleur (K2) au premier segment de fibre (F1), puis par le deuxième et le troisième branchement (A2, A3) du premier coupleur (K1) et ensuite par le troisième et le deuxième branchement (A3, A2) du troisième coupleur (K3) au deuxième segment de fibre (F2).

4. Amplificateur à fibres optiques au moins à deux étages selon la revendication 2, caractérisé en ce que les coupleurs (K1, K2, K3) et les segments de fibre (F1, F2), auxquels sont amenés le signal optique et la lumière de pompage (1) émise par la source de lumière de pompage (1), sont disposés de la façon suivante :
- le premier segment de fibre (F1), le deuxième coupleur (K2), le deuxième segment de fibre (F2) et le troisième coupleur (K3) sont montés en aval du premier coupleur (K1) dans l'ordre indiqué, les coupleurs ayant chacun un premier, un deuxième, un troisième et un quatrième branchements (A1, A2, A3, A4).
et en ce que le signal optique et la lumière de pompage sont guidés de la façon suivante :
- Le signal optique à amplifier est amené par le premier et le deuxième branchement (A1, A2) du premier coupleur (K1) au premier segment de fibre (F1).
- le signal optique amplifié disponible après le premier segment de fibre (F1) est amené par le premier et le deuxième branchements (A1, A2) du deuxième coupleur (K2) au deuxième segment de fibre (F2).
- le signal optique amplifié disponible après le deuxième segment de fibre (F2) est amené par le premier et le deuxième branchement (A1, A2) du troisième coupleur (K3) à la sortie (20) de l'amplificateur à fibres optiques.
- la lumière de pompage parvient par le troisième et le deuxième branchement (A3, A2) du premier coupleur (K1) au premier segment de fibre (F1), ensuite par le premier et le quatrième branchements (A1, A4) du deuxième coupleur (K2), et ensuite par le quatrième et le premier branchement (A4, A1) du troisième coupleur (K3) au deuxième segment de fibre (F2).

5. Amplificateur à fibres optiques au moins à deux étages selon la revendication 3, caractérisé en ce qu'entre le deuxième et le troisième coupleur (K2, K3) existent des moyens (2) qui laissent passer la lumière dans une seule direction.

6. Amplificateur à fibres optiques au moins à deux étages selon la revendication 4, caractérisé en ce qu'entre le deuxième coupleur (K2) et le deuxième segment de fibre (F2) existent des moyens (2) qui laissent passer la lumière dans une seule direction.

7. Amplificateur à fibres optiques au moins à deux étages pour l'amplification d'un signal optique, sur lequel on trouve au moins les éléments suivants :
une source de lumière de pompage (1,), un premier et un deuxième segment de fibre (F1, F2), qui sont dopés avec un élément de terre rare, et un premier, un deuxième et un troisième coupleur (K1, K2, K3), qui sont sélectifs au niveau de la longueur d'onde et par lesquels les segments de fibre sont reliés entre eux et la lumière de pompage (1) est reliée aux segments de fibre, et sur lequel on trouve deux fibres optiques (50, 5), qui sont disposées respectivement entre une sortie du deuxième coupleur (K2) et une entrée du troisième coupleur (K3), et des moyens (2) qui sont insérés dans l'une de ces fibres optiques (50) et laissent passer la lumière dans une seule direction, caractérisé en ce que, dans l'autre fibre optique (5), sont insérés des moyens (4) qui empêchent la propagation du signal optique en direction du deuxième coupleur (K2) vers le troisième coupleur (K3).
